# EUROPEAN PATENT APPLICATION

(11) **EP 3 150 774 A1**
(43) Date of publication of application: **05.04.2017**
(21) Application number: 15799517.6
(22) Date of filing: 26.05.2015
(51) Int. Cl.: E04C 1/41, E04C 1/00

(54) **BRICK INSULATION COMPOSITE AND METHOD FOR MANUFACTURING SAME**

(30) Priority: 27.05.2014 KR 20140063589
(71) Applicant: LG Hausys, Ltd., Seoul 150-721 (KR)
(72) Inventor: KIM, Myeong-Hee, Anyang-si, Gyeonggi-do 431-827 (KR); LEE, Eung-Kee, Anyang-si, Gyeonggi-do 431-735 (KR); CHOI, Chul-June, Daejeon 305-340 (KR); LEE, Min-Hee, Gunpo-si, Gyeonggi-do 435-060 (KR); KIM, Ji-Mun, Seoul 122-804 (KR); JI, Seung-Wook, Yeosu-si, Jeollanam-do 550-040 (KR); JEON, Byung-Joo, Seoul 158-769 (KR); PARK, Gun-Pyo, Seoul 138-875 (KR); SONG, Kwon-Bin, Incheon 407-771 (KR)
(74) Representative: Wynne-Jones, Laine and James LLP
(86) International application number: PCT/KR2015/005238
(87) International publication number: WO 2015/182951

(57) **Abstract**

Provided is a brick thermal insulation composite including a surface layer and an internal layer, wherein the surface layer is a brick material, the internal layer is formed with a heat curing foam insulation material, and the heat curing foam insulation material includes a foam resin and a fibrous reinforcement material.

## Description

### Field of the Invention

The present disclosure relates to a brick thermal insulation composite and a method of preparing the same.

### Background of the Invention

In traditional building constructions, concrete and bricks are used for external wall finishing. However, bricks are heavy providing inconvenience in terms of construction, and have a poor heat insulation property, and accordingly, houses made of bricks are highly influenced by external climates leading to a disadvantage of being hot in summer and cold in winter.

### Summary of the Invention

One embodiment of the present disclosure is directed to providing a lightweight brick thermal insulation composite having an enhanced heat insulation property.

Another embodiment of the present disclosure is directed to providing a method of preparing the brick thermal insulation composite.

One embodiment of the present disclosure provides a brick thermal insulation composite including a surface layer and an internal layer, wherein the surface layer is a brick material, the internal layer is formed with a heat curing foam insulation material, and the heat curing foam insulation material includes a foam resin and a fibrous reinforcement material.

The heat curing foam insulation material may include the fibrous reinforcement material in the content of 5% by weight to 60% by weight.

The fibrous reinforcement material may include at least one selected from the group consisting of cellulose fibers, polyester fibers, polyamide fibers, polyurethane fibers, acrylic fibers, glass fibers, carbon fibers and combinations thereof.

The foam resin may include at least one selected from the group consisting of urethane, phenol, melamine and combinations thereof.

The heat curing foam insulation material may have density of 30 Kg/m³ to 65 Kg/m³.

The heat curing foam insulation material may be integrated into the brick thermal insulation composite without an adhesive by being foamed and cured inside the surface layer, or may adhere to the surface layer with an adhesive.

The adhesive may be an acryl-based adhesive or an ethylvinyl acrylate-based adhesive.

The internal layer may occupy 30% by volume to 70% by volume of the brick thermal insulation composite.

The brick thermal insulation composite may have a cuboid-shaped brick size.

Another embodiment of the present disclosure provides a method of preparing a brick thermal insulation composite having a heat curing foam insulation material as an internal layer by separating and fixing two surface layers prepared from brick cutting, then introducing a composition for forming a heat curing foam insulation material into the space that has been made from the separation of the two surface layers, and then foaming and curing the composition for forming a heat curing foam insulation material .

The composition for forming a heat curing foam insulation material includes a foam resin and a fibrous reinforcement material, and the heat curing foam insulation material may include the fibrous reinforcement material in the content of 5% by weight to 60% by weight after the foaming and the curing.

Still another embodiment of the present disclosure provides a method of preparing a brick thermal insulation composite including preparing a heat curing foam insulation material including a foam resin and a fibrous reinforcement material; preparing surface layers by cutting a brick; cutting the heat curing foam insulation material so as to obtain a specific brick shape by adhering each of the surface layers to both sides of the heat curing foam insulation material; and attaching the surface layers to the both sides of the cut heat curing foam insulation material by applying an adhesive on the both sides.

The method of preparing a heat curing foam insulation material further includes preparing a composition for forming a heat curing foam insulation material including a foam resin and cellulose, and foaming and curing the composition for forming a heat curing foam insulation material to prepare the heat curing foam insulation material, and the heat curing foam insulation material may include the fibrous reinforcement material in the content of 5% by weight to 60% by weight after the foaming.

### Brief Description of the Drawings

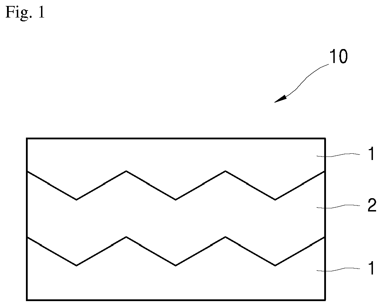

FIG. 1 illustrates an exemplary sectional structure of a brick thermal insulation composite according to one embodiment of the present disclosure.

### Detailed Description of the Embodiments

Hereinafter, embodiments of the present disclosure will be described in detail. However, these are for illustrative purposes only, and the scope of the present disclosure is not limited thereto, and the scope of the present disclosure is defined by the appended claims.

In the drawing of the present specification, thicknesses are enlarged in order to clearly show various layers and regions. In the drawing, thicknesses of some layers and regions are exaggerated for the convenience of description.

Meaning of an arbitrary constitution forming at the "top (or bottom)" of a substrate or "above (or below)" a substrate includes formation of the arbitrary constitution adjoining a top surface (or bottom surface) of the substrate, and also includes constitutions having another constitution between the substrate and the arbitrary constitution formed above (or below) the substrate.

One embodiment of the present disclosure provides a brick thermal insulation composite including a surface layer and an internal layer, wherein the surface layer is a brick material, the internal layer is formed with a heat curing foam insulation material, and the heat curing foam insulation material includes a foam resin and a fibrous reinforcement material.

The brick thermal insulation composite has an excellent heat insulation property and is light weight, and therefore, is readily used as building materials, and accordingly, is capable of providing convenience in terms of construction.

The brick thermal insulation composite may be prepared to shapes identical to the shapes of bricks, that is, to cuboid-shaped brick sizes, and may be used in the same application as bricks. In addition, the brick thermal insulation composite may be formed including an internal layer formed with a heat curing foam insulation material, and accordingly, has an advantage of, compared to bricks, exhibiting a more superior heat insulation property and providing convenience in terms of construction due to its lightweight.

In one embodiment, the heat curing foam insulation material may have density of approximately 30 Kg/m³ to approximately 65 Kg/m³. When the heat curing foam insulation material has density of less than approximately 30 Kg/m³, compression strength and flexural rigidity of the brick thermal insulation composite are reduced causing concern of the brick thermal insulation composite being readily crushed. When the heat curing foam insulation material has density of greater than approximately 65 Kg/m³, the heat curing foam insulation material materials are excessively used causing a cost increase, and a problem of heat insulation property decline may also occur.

The heat curing foam insulation material includes a foam resin and a fibrous reinforcement material. By the heat curing foam insulation material including a fibrous reinforcement material, strength may be enhanced. Accordingly, the brick thermal insulation composite including such a heat curing foam insulation material as an internal layer may obtain properties of excellent compression strength and flexural rigidity while including a thermal insulation material as an internal layer. As a result, the brick thermal insulation composite may not be readily crushed while having an excellent thermal insulation effect.

The fibrous reinforcement material may include at least one selected from the group consisting of, for example, cellulose fibers, polyester fibers, polyamide fibers, polyurethane fibers, acrylic fibers, glass fibers, carbon fibers and combinations thereof. The fibrous reinforcement material may be properly used considering its properties depending on the use, and for example, cellulose fibers as the fibrous reinforcement material are lighter and have relatively excellent effects in supplementing durability and enhancing a heat insulation property considering the weight.

The heat curing foam insulation material may be prepared by preparing a composition for forming a heat curing foam insulation material including a foam resin and a fibrous reinforcement material, and then foaming and curing the composition for forming a heat curing foam insulation material.

Examples of the foam resin may include urethane, phenol, melamine and the like, or combinations thereof.

The fibrous reinforcement material may have a fibriform having an average length of, specifically, approximately 10 mm to approximately 40 mm, and may use those having an average section diameter of approximately 15 deniers to approximately 100 deniers. The fibrous reinforcement material may be included in the content of 5% by weight to 60% by weight in the heat curing foam insulation material formed after foaming and curing the composition for forming a heat curing foam insulation material.

When the heat curing foam insulation material includes the fibrous reinforcement material in less than 5% by weight, an effect of strength reinforcement is insignificant leading to an insignificant effect in improving compression strength of the brick thermal insulation composite, and an effect of suppressing composite crushing is difficult to expect. When the fibrous reinforcement material is included in greater than 60% by weight, a heat insulation property may decline, and in addition thereto, viscosity of a foam resin increases leading to a disadvantage of making a foaming process itself difficult.

The internal layer may occupy approximately 30% by volume to approximately 70% by volume of the brick thermal insulation composite. The brick thermal insulation composite formed with a surface layer and an internal layer in the above mentioned volume ratio may have excellent mechanical strength of compression strength and flexural rigidity while having an excellent heat insulation effect.

The shape of the heat curing foam insulation material is not limited. In other words, the brick thermal insulation composite may be prepared using any method as long as the heat curing foam insulation material is not exposed to the surface as an internal layer, and is capable of being formed inside so as to have a volume ratio in the above-mentioned range.

For example, the heat curing foam insulation material may be integrated into the brick thermal insulation composite without an adhesive by being foamed and cured inside the surface layer.

As another example, the brick thermal insulation composite may be prepared by adhering the heat curing foam insulation material to a surface layer using an adhesive.

*37Examples of the adhesive may include, but are not limited to, acryl-based adhesives or ethylvinyl acrylate-based adhesives.

FIG. 1 illustrates an exemplary sectional structure of the brick thermal insulation composite.

In FIG. 1, the brick thermal insulation composite 10 shows a section in which surface layers 1 are formed on both sides, and an internal layer 2 formed with a heat curing foam insulation material is formed inside.

Another embodiment of the present disclosure provides a method of preparing a brick thermal insulation composite having a heat curing foam insulation material as an internal layer by separating and fixing two surface layers prepared from brick cutting, then introducing a composition for forming a heat curing foam insulation material to space made from the separation of the two surface layers, and then foaming and curing the composition for forming a heat curing foam insulation material.

As described above, the brick thermal insulation composite formed as a composite integrated without an adhesive by being foamed and cured inside the surface layer may be prepared using the above-mentioned method.

The content of the fibrous reinforcement material in the composition for forming a heat curing foam insulation material may be adjusted so that the heat curing foam insulation material includes the fibrous reinforcement material in the content of approximately 5% by weight to approximately 60% by weight after the foaming and the curing.

Still another embodiment of the present disclosure provides a method of preparing a brick thermal insulation composite including preparing a heat curing foam insulation material including a foam resin and a fibrous reinforcement material; preparing surface layers by cutting a brick; cutting the heat curing foam insulation material so as to obtain a specific brick shape by adhering each of the surface layers to both sides of the heat curing foam insulation material; and attaching the surface layers to the both sides of the cut heat curing foam insulation material by applying an adhesive on the both sides.

Using the above-mentioned method, the brick thermal insulation composite formed by adhering the heat curing foam insulation material to the surface layer using an adhesive may be prepared.

The method of preparing a brick thermal insulation composite may further include preparing the heat curing foam insulation material by preparing a composition for forming a heat curing foam insulation material including a foam resin and cellulose, and then foaming and curing the composition for forming a heat curing foam insulation material.

Likewise, the content of the fibrous reinforcement material in the composition for forming a heat curing foam insulation material may be adjusted so that the heat curing foam insulation material includes the fibrous reinforcement material in the content of approximately 5% by weight to approximately 60% by weight after the foaming.

Hereinafter, examples and comparative examples of the present disclosure will be described. However, the following examples are for illustrative purposes only, and the scope of the present disclosure is not limited to the following examples.

### (Example)

### Example 1

As main components, clay formed with 60% of silica and 23% of alumina was mixed and ground, and was discharged from a pug mill through a mold while maintaining 17% of moisture. The result was cut with a cutting M/C to be formed to a brick shape, was placed in a tunnel dryer, and then dried with heated air of 200°C to 300°C coming from a furnace wall so that the moisture content became 1% or less. The result was placed in a furnace, then baked at a high temperature of 1,100°C to 1,300°C, and then cooled to prepare a brick with 2 parallel surface layers to a thickness of 20 mm.

Separately, a composition for forming a heat curing foam insulation material including 100 parts by weight of a phenol resin and 30 parts by weight of a cellulose fiber was prepared.

The composition for forming a heat curing foam insulation material was foamed and cured at 70°C to prepare an internal layer having a thickness of 25 mm.

A brick thermal insulation composite was prepared by applying an ethylvinyl acetate (EVA) adhesive on both sides of the prepared internal layer, and attaching the prepared surface layers thereto.

### Example 2

A brick with two surface layers was prepared in the same manner as in Example 1, and a brick thermal insulation composite was prepared in the same manner as in Example 1 except that the internal layer was prepared by preparing a composition for forming a heat curing foam insulation material including 100 parts by weight of a phenol resin and 70 parts by weight of a cellulose fiber.

### Com parative Example 1

A brick having a thickness of 65 mm was prepared in the same manner as the surface layer of Example 1.

### Com parative Example 2

A brick with two surface layers was prepared in the same manner as in Example 1, and a brick thermal insulation composite was prepared in the same manner as in Example 1 except that the internal layer was prepared by preparing a composition for forming a heat curing foam insulation material without including a cellulose fiber.

### Evaluation

For the bricks of Examples 1 and 2, and Comparative Example 1, and the brick thermal insulation composite prepared in Comparative Example 2, performance analyses were carried out on each of the following.

### < Density>

For the brick thermal insulation composites of Examples 1 and 2, the brick of Comparative Example 1 and the brick thermal insulation composite prepared in Comparative Example 2, exact dimensions and weights were measured to measure density, and the results are shown in the following Table 1.

### <Compression Strength>

For the brick thermal insulation composites of Examples 1 and 2, the brick of Comparative Example 1 and the brick thermal insulation composite prepared in Comparative Example 2, compression strength was measured using a universal testing machine (UTM). As for the measurement condition, a maximum load was measured when the sample was destroyed with strength of 5 kgf/cm² per second, and the results are shown in the following Table 1.

### <Thermal Conductivity>

For the brick thermal insulation composites of Examples 1 and 2, the brick of Comparative Example 1 and the brick thermal insulation composite prepared in Comparative Example 2, thermal conductivity was measured in accordance with the test method of KS L 3121, and the results are shown in the following Table 1.

**[Table 1]**

| Category | Density [unit: kg/m³] | Compression Strength [unit: kg/cm²] | Thermal Conductivity [unit: W/mK] |
|---|---|---|---|
| Example 1 | 446.9 | 100 | 0.0432 |
| Example 2 | 450.0 | 103 | 0.0528 |
| Comparative Example 1 | 700.0 | 120 | 0.6825 |
| Comparative Example 2 | 444.6 | 86 | 0.0421 |

From the results of Table 1, it was identified that the brick thermal insulation composites of Examples 1 and 2 exhibited excellent levels of compression strength and heat insulation property while accomplishing a light weight with significantly lower density compared to Comparative Example 1.

In addition, the brick thermal insulation composites of Examples 1 and 2 exhibited more superior compression strength while accomplishing a light weight with an equal level of density compared to Comparative Example 2 by further including a cellulose fiber in the internal layer.

The brick thermal insulation composite is lightweight while securing a heat insulation property, and accordingly, is capable of providing convenience in terms of brick construction.

While preferred embodiments of the present disclosure have been described in detail, the scope of the present disclosure is not limited thereto, and various modifications and improvements made by those skilled in the art using fundamental concepts of the present disclosure defined in the appended claims are also included in the scope of the present disclosure.

### [Reference Numeral]

- 1:: Surface Layer
- 2:: Internal Layer
- 10:: Brick Thermal Insulation Composite

## Claims

1. A brick thermal insulation composite comprising:
a surface layer; and
an internal layer,
wherein the surface layer is a brick material, the internal layer is formed with a heat curing foam insulation material, and the heat curing foam insulation material includes a foam resin and a fibrous reinforcement material.

2. The brick thermal insulation composite of Claim 1, wherein the heat curing foam insulation material includes the fibrous reinforcement material in a content of 5% by weight to 60% by weight.

3. The brick thermal insulation composite of Claim 1, wherein the fibrous reinforcement material includes at least one selected from the group consisting of a cellulose fiber, a polyester fiber, a polyamide fiber, a polyurethane fiber, an acrylic fiber, a glass fiber, a carbon fiber and a combination thereof.

4. The brick thermal insulation composite of Claim 1, wherein the foam resin includes at least one selected from the group consisting of urethane, phenol, melamine and a combination thereof.

5. The brick thermal insulation composite of Claim 1, wherein the heat curing foam insulation material has density of 30 Kg/m³ to 65 Kg/m³.

6. The brick thermal insulation composite of Claim 1, wherein the heat curing foam insulation material is integrated into the brick thermal insulation composite without an adhesive by being foamed and cured within the surface layer, or adheres to the surface layer with an adhesive.

7. The brick thermal insulation composite of Claim 6, wherein the adhesive is an acryl-based adhesive or an ethylvinyl acrylate-based adhesive.

8. The brick thermal insulation composite of Claim 1, wherein the internal layer occupies 30% by volume to 70% by volume of the brick thermal insulation composite.

9. The brick thermal insulation composite of Claim 1, which has a cuboid-shaped brick size.

10. A method of preparing a brick thermal insulation composite having a heat curing foam insulation material as an internal layer by separating and fixing two surface layers prepared from brick cutting, then introducing a composition for forming a heat curing foam insulation material into space made from the separation of the two surface layers, and then foaming and curing the composition for forming a heat curing foam insulation material.

11. The method of preparing a brick thermal insulation composite of Claim 10, wherein the composition for forming a heat curing foam insulation material includes a foam resin and a fibrous reinforcement material, and the heat curing foam insulation material includes the fibrous reinforcement material in a content of 5% by weight to 60% by weight after the foaming and the curing.

12. A method of preparing a brick thermal insulation composite comprising:
preparing a heat curing foam insulation material including a foam resin and a fibrous reinforcement material;
preparing surface layers by cutting a brick;
cutting the heat curing foam insulation material so as to obtain a specific brick shape by adhering each of the surface layers to both sides of the heat curing foam insulation material; and
attaching the surface layers to the both sides of the cut heat curing foam insulation material by applying an adhesive on the both sides.

13. The method of preparing a brick thermal insulation composite of Claim 12, further comprising preparing a composition for forming a heat curing foam insulation material including a foam resin and cellulose, and foaming and curing the composition, wherein the heat curing foam insulation material includes the fibrous reinforcement material in a content of 5% by weight to 60% by weight after the foaming.
